# EUROPEAN PATENT SPECIFICATION

(11) **EP 2 539 593 B1**
(45) Date of publication and mention of the grant of the patent: **07.08.2019**
(21) Application number: 11747790.1
(22) Date of filing: 15.02.2011
(51) Int. Cl.: F16H 61/30, F15B 15/14, F15B 15/22, F15B 15/28

(54) **ARRANGEMENT AND METHOD FOR CONTROL OF A PISTON MOVEMENT**
ANORDNUNG UND VERFAHREN ZUR STEUERUNG EINER KOLBENBEWEGUNG
DISPOSITIF ET PROCÉDÉ POUR LA COMMANDE DU MOUVEMENT D'UN PISTON

(30) Priority: 24.02.2010 SE 1050170
(43) Date of publication of application: 02.01.2013
(73) Proprietor: Scania CV AB, 151 87 Södertälje (SE)
(72) Inventor: SCHLÜTER, Ortwin, S-153 95 Järna (SE)
(74) Representative: Scania CV AB
(86) International application number: PCT/SE2011/050160
(87) International publication number: WO 2011/105952

(56) References cited:
- EP-A1- 1 961 974
- WO-A1-03/010452
- WO-A1-2008/009547
- DE-A1- 10 139 769
- DE-A1- 19 617 058
- DE-A1- 19 934 804
- FR-A- 1 518 631
- US-A1- 2009 247 357
- US-B1- 6 612 196

## Description

### Technical field

The invention relates to an arrangement for control of a piston movement in a compressed air cylinder according to the preamble of claim 1.

The invention relates also to a gearbox comprising said arrangement, and a method for control of a piston movement.

### Background

Various types of gearboxes are used for example in vehicles to adapt the power transfer from the vehicle's engine to the drive shafts which power the vehicle's powered wheels. The gearbox comprises a main shaft and, parallel to it, a countershaft which both have a number of gearwheels disposed round them. The number of gearwheels along the shafts depends on the number of gear positions of the gearbox.

Gear changing involves chosen gearwheels being engaged with/disengaged from the driveshaft or the countershaft so that desired torque is transmitted to the driveshaft. It also involves a control unit controlling on the basis of a chosen gear position a lateral stroke shaft which is movable in a transverse direction relative to the main shaft and the countershaft, and a longitudinal shaft which is moved parallel with the main shaft and the countershaft. The various shafts effect engagement and disengagement of gearwheels along the countershaft and the main shaft.

For the respective engagement and disengagement of gearwheels relative to the shaft about which they are disposed to be effected quickly and correctly, a considerable force directed axially needs to be applied to the shafts. Particularly great force is required at low temperatures, at which the viscosity of the lubricant changes such that the various parts of the gearbox slide less easily relative to one another. A way of achieving the necessary force is to provide a compressed air cylinder adjacent to the respective shaft. The compressed air cylinder is then situated in the extension of the respective shaft so that when compressed air from the vehicle's compressed air system is supplied the compressed air cylinder generates the shaft movement.

The compressed air cylinder has a longitudinal stem and a piston which is situated in a circular cylindrical hollow space and which has the stem fastened to it. The piston and the stem are movable between at least two different positions in the hollow space. The piston is placed in the hollow space in such a way that there is a space V1 on one side of the piston and a space V2 on the opposite side of the piston. The piston and hence the lateral stroke shaft connected to it can be moved in desired directions by connecting the compressed air and pressurising the respective spaces V1 and V2.

When compressed air is supplied to the space V1 or V2, the piston moves quickly towards one of the extreme positions at which it stops when it strikes the casing which surrounds the cylinder. This does however mean that a loud impact noise occurs when the piston strikes the casing.

There are currently a number of different solutions for damping this impact noise. One variant is to provide an impact-damping elastic element between the contact surfaces of the piston and the casing. The disadvantage of that solution is that after a time the impact-damping element disintegrates, leading to no damping and, in the worst case, to the remaining fragments retarding or jamming the piston in the casing.

Another solution for damping this impact noise is to place a permanent constriction on the compressed air supply to the respective space so that the velocity of the piston is reduced and it therefore moves more slowly towards the casing. However, the constriction also slows down the actual gear change, a clear disadvantage in that rapid gear changing is important for the gearbox.

A further damping device is hydraulic damping, but this is expensive in that it is complicated, requires maintenance and does not function satisfactorily at low temperatures.

There is therefore need for a compressed air cylinder which is not subject to the above disadvantages, and for a method for controlling the piston movement in the compressed air cylinder.

Another type of compressed air cylinders are single-acting cylinders. In this type of cylinders the piston only have two possible positions (at each end of the cylinder). Air is added to a space and pushes the piston to one end position and when air is let out of the space, a spring pushes the piston towards the other end position. DE-A1 -10139769 and DE-A1-19934604 are examples of single-acting cylinders.

### Summary of the invention

The object of the present invention is to eliminate the above problems. This is achieved by an arrangement according to the first independent claim, and a method according to the second independent claim.

The arrangement for moving a piston in a compressed air cylinder comprises:
- a compressed air cylinder comprising: a casing which surrounds a substantially circular cylindrical cylinder chamber, a longitudinal stem intended to transmit force from the compressed air cylinder, a piston coupled to the longitudinal stem and having a substantially circular shape and radius corresponding to the inside radius of the cylinder chamber, the piston being placed in the cylinder chamber in such a way that a space is formed on each side of the piston and that one of the spaces has a compressed air hose or pipe connected to it, and the other space has disposed in it a spring which acts between the piston and the casing of the cylinder chamber so that the spring acts to urge the piston to an extreme position in the cylinder chamber, being a postion of rest, at which the space where compressed air is supplied is minimised;
- a valve device situated adjacent to the space to which compressed air is supplied, or somewhere along the compressed air hose or pipe;
- a compressed air device for feeding compressed air to the space via the valve device and the compressed air hose or pipe;
- a control unit connected to the valve device for controlling the supply of compressed air to the space in the compressed air cylinder via the compressed air hose or pipe;
- an aperture or valve through which air is allowed to leave the space.

The arrangement is characterised in that the control unit further comprises means for controlling the valve device in such a way that it supplies compressed air to the space in a constant flow, or in pulses of varying length, so that the piston and the stem coupled to said piston are thereby moved to desired positions in the cylinder chamber and also kept in the respective desired position.

The aperture or valve through which air is allowed to leave the space is always in communication with the space to which compressed air is supplied. This makes it possible to control the valve entirely by regulating the inlet to the cylinder chamber. No regulation of the outlet is applied. If the aperture takes the form of a valve, it is therefore an unregulated, passive, valve. The fact that the aperture is always in communication with the space means that the aperture helps all the time to regulate the amount of air in the valve chamber.

Using the valve device to control the compressed air flow to the space in the cylinder chamber makes it possible to move the piston precisely to various positions in the cylinder chamber by air being allowed to leave the space via the aperture or valve despite the fact that the arrangement comprises only one valve device. The number of components of the arrangement is thus reduced. The aperture through which air is allowed to leave the space may be situated at various locations, e.g. in the casing of the cylinder or between the surface of the piston and the inside surface of the cylinder chamber.

An advantageous embodiment of the arrangement comprises means for detecting the position of the piston, representing a parameter, for transmitting this parameter to the control unit in order to determine when compressed air should be supplied to the space, and the length of the compressed air pulses. This embodiment of the arrangement enhances safety in that the position of the piston can be monitored continuously to quickly detect any malfunctions.

The possibility of continuously detecting the position of the piston makes it possible for the control unit to adapt the air supply more exactly in order thereby to place the piston in desired positions. The control unit may also be so configured as to increase/decrease the air supply when the piston is beginning to approach extreme positions in the cylinder chamber and thereby to reduce the velocity of the piston before it meets the surrounding casing, so that the amount of disturbing noise generated is reduced.

In an advantageous embodiment of the arrangement, the means for detecting the position of the piston is situated in the axial extension of the space and comprises a second stem situated in the extension of the first stem on the opposite side of the piston from the first stem, and a position-determining unit comprising a recess in which the second stem moves so that the position of the piston in the control unit can be detected. This is an advantageous configuration of the position-detecting means in that it allows position detection with good precision. The means may for example take the form of an inductive position sensor.

In an advantageous embodiment of the arrangement, the piston is movable between three positions in the cylinder chamber, one of the extreme positions being a position of rest to which the piston is returned by the spring. This is a simple and reliable embodiment of the arrangement in that the piston can be moved from its position of rest to the central position by the valve device supplying the space with compressed air in pulse form, and to the opposite extreme position by supplying a continuous flow of compressed air and thereby overcoming the spring force which urges the piston in the opposite direction.

In an advantageous embodiment of the arrangement, the valve device is a solenoid valve. Not only may the solenoid valve be open so that a continuous flow of compressed air is supplied to the space, but the fact that it can quickly be switched between open and closed positions means that it can also be used to generate the pulsating compressed air flow.

In an advantageous embodiment of the arrangement, the configuration of the valve device is such that it delivers a compressed air pulse with a frequency of up to 250 Hz. This frequency makes it possible for the control unit to quickly and reliably control the movement velocity of the piston and ensure that it is put into and kept in desired positions.

In an advantageous embodiment of the arrangement, the size of the aperture or the configuration of the valve is such that the air flow from the space is smaller than the compressed air flow into the space.

The arrangement according to the invention may with advantage be used in a gearbox, in which case the longitudinal stem of the compressed air cylinder is connected to a lateral stroke shaft in the gearbox. The lateral stroke shaft is transverse relative to the main shaft and the countershaft of the gearbox.

The present invention relates also to a method for control of a piston movement in an arrangement as above. Movement of the piston from the position of rest is generated by the control unit activating the valve device so that compressed air is supplied to the space in a constant flow, or in pulses of a certain period or length, so that the piston is thereby moved from its position of rest to desired positions in the cylinder chamber and also kept in the respective desired position.

This method affords the advantage that despite the comparatively small number of components of the arrangement the piston can be moved between a number of different positions in the compressed air cylinder by varying the amount of compressed air supplied to the space.

In a second embodiment of the method, the actual position of the piston in the compressed air cylinder is detected continuously so that this information can be used in the control unit for reliable control of the length and period of the compressed air pulses until the piston is in a desired position. More reliable control with greater precision is thus made possible.

In an embodiment of the method, the control unit supplies a constant flow of compressed air to the space and thereby moves the piston from its position of rest to a far extreme position in the cylinder chamber.

In an embodiment of the method, the control unit increases the length of the compressed air pulses and thereby effects a larger (i.e. increased) movement from the piston's position of rest.

In an embodiment of the method, the control unit reduces the length of the compressed air pulses and thereby effects a smaller (i.e. reduced) movement of the piston from the position of rest.

In an embodiment of the method, it is possible by increase of pulse length during movement of the piston to increase or damp its velocity, depending on the direction of movement, in the same way as reduction of pulse length is used to damp or increase the piston's velocity, depending on the direction of movement.

The arrangement according to the invention in combination with the method described above thus makes it possible to control the piston movement between desired positions in the compressed air cylinder but also to control desired damping of the piston's velocity before it reaches a desired position. This is particularly advantageous in that the control unit can thus retard the movement of the piston before it reaches either of the extreme positions in the cylinder chamber at which high piston velocity would cause undesirable generation of noise when the piston meets the casing of the compressed air cylinder. The method and the arrangement comprising relatively few components thus make it possible to control with very great precision the position and movement of the piston.

The embodiments indicated above may of course be combined in various ways to achieve an arrangement and method for its control which are well adapted to this field of use.

### Brief description of the drawings

The invention is explained in more detail below with reference to the drawings, in which:
- Figure 1: depicts schematically a first embodiment of the arrangement.
- Figure 2: shows in diagram form how the position of the piston can be controlled by control of the valve device for supply of compressed air to the compressed air cylinder.

### Detailed description of the invention

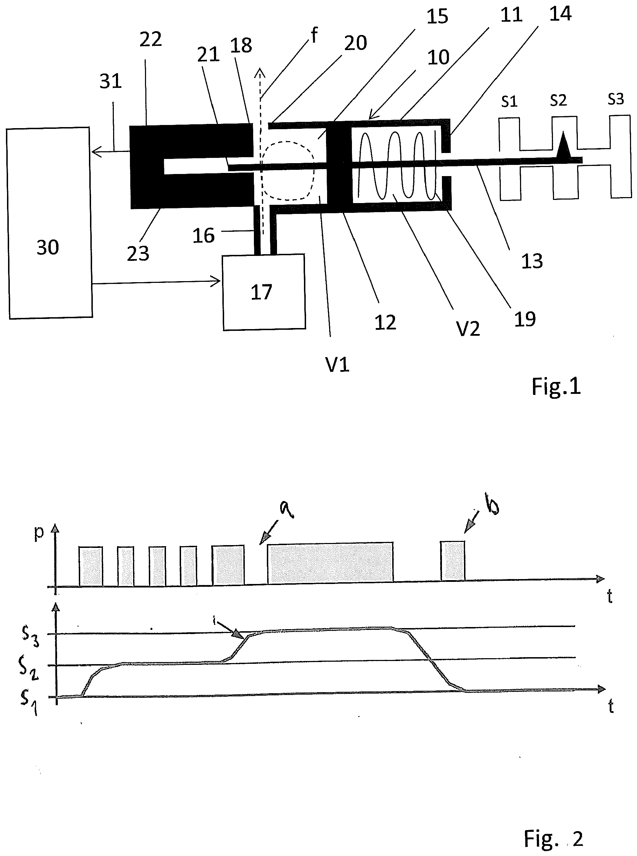

Figure 1 depicts schematically an embodiment of a compressed air cylinder 10. The compressed air cylinder 10 comprises a casing 11 which surrounds a piston 12 and, coupled thereto, a stem 13 protruding longitudinally from the centre of one side of the piston, through an end wall 14 of the compressed air cylinder 10 and out from the casing 11, making it possible for the axial movement generated by the compressed air cylinder to be used appropriately in desired applications.

The casing 11 of the compressed air cylinder 10 encloses a cylinder chamber 15 of substantially circular cylindrical shape. The cylinder chamber 15 may also be of other shapes provided that they correspond to the shape of the piston 12. For the compressed air cylinder 10 to function as intended, it is important for there to be good sealing between the outer periphery of the piston 12 and the inside of the cylinder chamber 15 and between the periphery of the stem 13 and the outlet in the casing end wall 14. There are various types of sliding seal which may be placed on the outer periphery of the piston 12 and on the inside surface of the outlet. The configuration of the outside of the casing may differ depending on the application at which the compressed air cylinder 10 is to be used.

On each side of the piston 12 a space V1 and V2 is formed in the cylinder chamber 15 and is of a size (volume) which depends on the position of the piston 12 in the cylinder chamber 15. The volume of these spaces V1 and V2 varies during use of the compressed air cylinder 10 and depends, as previously mentioned, on the axial position of the piston 12 in the cylinder chamber 15. In the embodiment depicted in Figure 1, the piston 12 and the stem 13 coupled to it are movable between three different positions s₁, s₂ and s₃. Position s₁ corresponds to when the piston 12 is close to its position of rest at one end of the cylinder chamber 15, position s₂ is close to the centre of the cylinder chamber 15 and position s₃ corresponds to when the piston 12 is at the opposite end of the cylinder chamber 15.

A compressed air hose 16 with associated valve device 17 is connected at one end of the cylinder chamber 15. The compressed air hose 16 leads into the cylinder chamber 15 close to the cylinder chamber's other end wall 18. The compressed air hose 16 is also connected to an undepicted compressed air source which constantly supplies compressed air via the hose 16 to the valve device 17. On the opposite side of the piston 12 a spring 19 is situated between the piston 12 and the end wall 14 of the compressed air cylinder. The spring 19 urges the piston 12 to its position of rest, which is an extreme position in the cylinder chamber 15.

An aperture 20 is situated in the casing 11 at substantially the same axial position as the connection of the compressed air hose 16 to the cylinder chamber 15.

By opening the valve 17 and thereby connecting the compressed air and pressurising the space V1, the piston 12 and hence the stem 13 coupled to it can be moved towards positions s₂ and s₃. The fact that a certain amount of air continuously flows out from the space V1 via the aperture 20 in the casing 11 makes it possible for the position of the piston 12 to be controlled entirely by means for the valve device 17 which controls the amount of air supplied to the space V1. The aperture 20 may be configured in various ways. An alternative solution is to configure the outer periphery in such a way that an aperture of the desired size is formed between the periphery of the piston and the inside surface of the cylinder chamber. The aperture may alternatively be replaced by a valve which allows air to flow out from the space V1 when a certain pressure prevails in the space. In such cases the valve is an unregulated, passive valve. Even if the aperture takes the form of a valve, it is entirely by means of the valve device 17 that the position of the piston 12 is controlled. The object of the aperture 20, irrespective of whether it takes the form of a hole or a passive valve, is to release an amount of air such that the position of the piston 12 can be regulated entirely by the valve device 17.

According to an embodiment, on the opposite side of the piston 12 from the protruding stem 13, there is a second stem 21 arranged coaxially with the protruding stem 13. The second stem 21 serves as part of a position-determining unit 22 situated in the axial extension of the space V1. The position-determining unit 22 comprises also a recess 23 which is coaxial with the second stem 21 and so situated that its open end is at the centre of the end wall 18 of the space V1, and the second stem 21 extends into the recess 23. When the piston 12 and the second stem 21 coupled to it move in the cylinder chamber 15, the second stem 21 moves in the recess 23, which is at least as long as the length of the second stem 21. The position-determining unit 22 detects the position of the second stem 21 in the recess 23, making it possible to detect also the movement velocity of the piston 12 in the compressed air cylinder 10.

The valve device 17, whatever its embodiment, is controlled by a control unit 30 which comprises control means, e.g. programme code, for using certain specific parameters as a basis for effecting desired control of the valve device 17 so that compressed air is supplied to the space V1 to achieve the desired piston movement. The position-determining device of the compressed air cylinder 10 for detecting the position and velocity of the piston 12 is one of several parameters used in the control unit 30.

When the axial piston movement generated by the compressed air cylinder 10 as described above is needed, the control unit 30 activates the valve device 17 to generate the desired piston and stem movement by pressurisation and compressed air supply to the space V1. If the piston 12 is to be moved to the midmost position, position s₂, the valve device is caused to pulsatingly supply compressed air to the space V1 so that the piston 12 is kept in a desired position in the cylinder chamber 15. If instead the piston is to be moved all the way to the opposite extreme position in the cylinder chamber 15, the valve device 17 is caused to supply a constant flow of compressed air to the space V1 so that the spring force is overcome and the piston moves to position s₃. When the supply of compressed air to the space V1 is reduced or ceases, the piston returns towards the position of rest at position s₁ as a result of the air in the space V1 leaving the space V1 through the aperture 20. The flow from the valve device 17 through the hose 16 into the space V1 and finally out of the space V1 via the aperture 20 is represented schematically by the broken arrow f.

The control unit may also be used to effect velocity regulation of the piston's movement when the piston 12 is approaching its desired position in the cylinder chamber 15. This velocity regulation is achieved when the piston 12 is moving away from the position of rest, position s₁, by increasing the interval between the compressed air pulses when the piston is close to position s₂ so that its velocity is reduced, and when the piston is approaching position s₃, instead of continuously supplying compressed air, by reducing further air supply and thereby slowing the velocity of the piston before it reaches the extreme position, position s₃.

In the case of piston movement in the opposite direction, i.e. towards the position of rest s₁, the compressed air supply to the space V1 is increased so that the velocity of the piston 12 is thereby reduced before it reaches position s₁ or s₂.

Figure 2 depicts piston positions s₁, s₂, s₃ in the lower diagram as a function of time during pressurisation/compressed air supply to the space V1 according to the upper diagram. The time axes are to the same scale.

The diagram in Figure 2 shows that if no compressed air is supplied to the space V1 the piston is in position s₁. Supplying pulses of compressed air then moves the piston to position s₂. The pulse length increases thereafter and the piston's movement towards position s₃ begins. Before the piston reaches s₃, however, the pressurisation/compressed air supply is halted, as indicated by the arrow a, for a short time to reduce the piston's velocity before it reaches the extreme position, position s₃. If the piston is to remain in position s₃, compressed air is fed constantly to the space V1 until the piston is to be moved towards the position of rest, position s₁. The return movement is effected by the spring 19 when the compressed air supply to the space V1 ceases. To slow the velocity of the piston before it reaches its desired position s₁ or s₂, a retarding compressed air pulse is supplied to the space V1, as illustrated by the arrow b.

The length of the pulses may thereby be used as a parameter for further controlling the amount of piston damping applied. This may for example be used to adapt the damping on the basis of, for example, prevailing temperatures in the gearbox where the compressed air valve is used, since the viscosity of lubricants depends on their temperature.

The compressed air is used not only to generate the desired piston movement but also as damping medium by means of the control unit which at chosen times activates or removes the supply of compressed air to the space V1.

The invention is described above on the basis of an embodiment, but a number of modifications are conceivable such as:
- The compressed air cylinder may be configured in various different ways, e.g. with regard to its cross-sectional shape.
- The compressed air cylinder might have a larger number of different piston positions.
- The control unit may be configured and adapted on the basis of desired damping characteristics.
- Regulating the outlet of air from the space V1 and having instead an unregulated inflow of air.

Although the invention has been described on the basis of some exemplifying embodiments, it is not limited to them but is defined on the basis of the accompanying claims.

## Claims

1. An arrangement for moving a piston (12) in a compressed air cylinder (10), which arrangement comprises:
- a compressed air cylinder (10) comprising: a casing (11) which surrounds a substantially circular cylindrical cylinder chamber (15), a longitudinal stem (13) intended to transmit force from the compressed air cylinder, a piston (12) coupled to the longitudinal stem (13) and having a substantially circular shape and a radius corresponding to the inside radius of the cylinder chamber, the piston (12) being placed in the cylinder chamber (15) in such a way that a space (V1, V2) is formed on each side of the piston and that one of the spaces (V1) has a hose (16) or pipe connected to it for supply of compressed air, and the other space (V2) has disposed in it a spring (19) which acts between the piston (12) and the casing (11) of the cylinder chamber so that the spring (19) acts to urge the piston to an extreme position (s₁) in the cylinder chamber (15), being a position of rest, at which the space (V1) where compressed air is supplied is minimised;
- a valve device (17) situated adjacent to the space (V1) to which compressed air is supplied, or somewhere along the compressed air hose (16) or pipe;
- a compressed air device for feeding compressed air to the space (V1) via the valve device (17) and the compressed air hose (16) or pipe;
- a control unit (30) connected to the valve device (17) for controlling the supply of compressed air to the space (V1) in the compressed air cylinder (10) via the compressed air hose (16) or pipe; and
- an aperture (20) or valve which allows air to leave the space (V1) when a certain pressure prevails therein and through which air is allowed to leave the space (V1), such that the aperture (20) or valve is always in communication with the space (V1), which arrangement is **characterised in that** the control unit (30) comprises means for controlling the valve device (17) in such a way that it supplies compressed air to the space (V1) in a constant flow, or in pulses of varying length, so that the piston (12) and the stem (13) coupled to said piston are thereby moved to desired positions in the cylinder chamber (15) and also kept in the respective desired position.

2. An arrangement according to claim 1, **characterised in that** the arrangement comprises means for detecting the position of the piston, representing a parameter, and that this parameter is transmitted to the control unit (30) via a line (31) in order to determine when compressed air should be supplied to the space (V1), and the length of the compressed air pulses.

3. An arrangement according to claim 2, **characterised in that** the means for detecting the position of the piston (12) is situated in the axial extension of the space (V1) and comprises a second stem (21) situated in the extension of the first stem (13) on the opposite side of the piston (12), and a position-determining unit (22) comprising a recess (23) in which the second stem (21) moves so that the position of the piston (12) in the compressed air cylinder (10) can be detected.

4. An arrangement according to claim 1, 2 or 3, **characterised in that** the piston (12) is movable between two or more continuously variable positions in the cylinder chamber (15).

5. An arrangement according to claim 1, 2 or 3, **characterised in that** the piston (12) is movable between three positions in the cylinder chamber (15), one of which is a position of rest (s₁) to which the piston (12) is returned by the spring (19).

6. An arrangement according to any one of the foregoing claims, **characterised in that** the valve device (17) is a solenoid valve.

7. An arrangement according to any one of the foregoing claims, **characterised in that** the valve device (17) is so configured that it delivers a compressed air pulse with a frequency of up to 250 Hz.

8. An arrangement according to any one of the foregoing claims, **characterised in that** the size of the aperture (20) in the cylinder chamber casing (11), or the configuration of the valve, is such that the air flow from the space (V1) is smaller than the compressed air flow into the space (V1).

9. A gearbox comprising an arrangement according to any one of claims 1-8, such that the longitudinal stem (13) of the compressed air cylinder (10) is connected to any of the shafts of the gearbox which are used when engaging/disengaging various gear positions in the gearbox.

10. A gearbox according to claim 9, **characterised in that** that the longitudinal stem (13) is connected to a lateral stroke shaft in the gearbox.

11. A method for generating a movement of a piston (12) in a compressed air cylinder (10) which forms part of an arrangement according to any one of claims 1 to 8, **characterized in that** the movement of the piston (12) is generated by the control unit (30) activating the valve device (17) so that compressed air is supplied to the space (V1) in a constant flow, or in pulses of a certain period and length, so that the piston (12) is thereby moved from its position of rest (s₁) to desired positions in the cylinder chamber (15) and also kept in the respective desired position.

12. A method according to claim 11, also comprising the step of detecting the position of the piston (12) in the compressed air cylinder (10), and the control unit (30) using this information for reliable control of the length and period of the compressed air pulses until the piston (12) is in a desired position.

13. A method according to claim 11 or 12, in which the control unit, by supplying a constant flow of compressed air to the space (V1), moves the piston (12) to a far extreme position (s₃) in the cylinder chamber (15).

14. A method according to any one of claims 11 to 13, in which the control unit (30), if the compressed air is supplied in pulses, by increasing the length of compressed air pulses, effects an increased movement from the piston's position of rest (s₁).

15. A method according to any one of claims 11 to 14, in which the control unit (30), if the compressed air is supplied in pulses, by reducing the length of the compressed air pulses, effects a reduced movement of the piston (12) from the position of rest (s₁).

16. A method according to any one of claims 11 to 15, in which an increase/reduction of pulse length is further used to control the movement velocity of the piston.

## Patentansprüche

1. Anordnung zum Bewegen eines Kolbens (12) in einem Druckluftzylinder (10), wobei die Anordnung aufweist:
- einen Druckluftzylinder (10) mit: einem Gehäuse (11), welches eine im Wesentlichen kreisförmige zylindrische Zylinderkammer (15) umgibt, einem längsverlaufenden Schaft (13), der dazu vorgesehen ist, Kraft von dem Druckluftzylinder zu übertragen, einem mit dem längsverlaufenden Schaft (13) gekoppelten Kolben (12), der eine im Wesentlichen kreisförmige Gestalt und einen Radius entsprechend dem Innenradius der Zylinderkammer hat, wobei der Kolben (12) in der Zylinderkammer (15) solchermaßen platziert ist, dass ein Raum (V1, V2) auf jeder Seite des Kolbens gebildet ist und dass einer der Räume (V1) einen mit ihm verbundenen Schlauch (16) oder ein Rohr zur Zufuhr von Druckluft aufweist, und der andere Raum (V2) in sich eine Feder (19) angeordnet hat, die zwischen dem Kolben (12) und dem Gehäuse (11) der Zylinderkammer wirkt, so dass die Feder (19) dahingehend wirkt, den Kolben in eine Extremstellung (s₁) in der Zylinderkammer (15) zu drängen, die eine Ruhestellung ist, in der der Raum (V1), in den Druckluft zugeführt wird, minimiert ist,
- eine Ventileinrichtung (17), die neben dem Raum (V1) angeordnet ist, in den Druckluft zugeführt wird, oder irgendwo entlang des Druckluftschlauches (16) oder -rohres,
- eine Drucklufteinrichtung zum Zuführen von Druckluft zum Raum (V1) über die Ventileinrichtung (17) und den Druckluftschlauch (16) oder das Druckluftrohr,
- eine mit der Ventileinrichtung (17) verbundene Steuereinheit (30) zum Steuern der Zufuhr von Druckluft zum Raum (V1) in den Druckluftzylinder (10) über den Druckluftschlauch (16) oder das Druckluftrohr, und
- eine Öffnung (20) oder ein Ventil, die bzw. das es Luft erlaubt, den Raum (V1) zu verlassen, wenn ein bestimmter Druck darin vorherrscht, und durch die bzw. das Luft gestattet wird, den Raum (V1) zu verlassen, so dass die Öffnung (20) oder das Ventil ständig in Kommunikation mit dem Raum (V1) steht, wobei die Anordnung **dadurch gekennzeichnet ist, dass** die Steuereinheit (30) Mittel zum Steuern der Ventileinrichtung (17) solchermaßen aufweist, dass sie Druckluft zum Raum (V1) mit konstanter Durchflussmenge oder mit Pulsen variierender Dauer zuführt, so dass der Kolben (12) und der mit dem Kolben gekoppelte Schaft (13) dadurch in gewünschte Positionen in der Zylinderkammer (15) bewegt werden und auch in der entsprechenden gewünschten Position gehalten werden.

2. Anordnung nach Anspruch 1,
**dadurch gekennzeichnet, dass** die Anordnung Mittel zum Erfassen der Position des Kolbens aufweist, die einen Parameter repräsentiert, und dass dieser Parameter über eine Leitung (31) an die Steuereinheit (30) übertragen wird, um zu ermitteln, wann Druckluft dem Raum (V1) zugeführt werden soll sowie die Dauer der Druckluftpulse.

3. Anordnung nach Anspruch 2,
**dadurch gekennzeichnet, dass** die Mittel zum Erfassen der Position des Kolbens (12) in der Axialerstreckung des Raums (V1) angeordnet sind und einen zweiten Schaft (21), der sich in der Verlängerung des ersten Schafts (13) auf der entgegengesetzten Seite des Kolbens (12) befindet, und eine Positionsermittlungseinheit (22) mit einer Ausnehmung (23) umfassen, in der der zweite Schaft (21) sich bewegt, so dass die Position des Kolbens (12) in dem Druckluftzylinder (10) erfasst werden kann.

4. Anordnung nach Anspruch 1, 2 oder 3,
**dadurch gekennzeichnet, dass** der Kolben (12) zwischen zwei oder mehreren kontinuierlich veränderbaren Positionen in der Zylinderkammer (15) bewegbar ist.

5. Anordnung nach Anspruch 1, 2 oder 3,
**dadurch gekennzeichnet, dass** der Kolben (12) zwischen drei Positionen in der Zylinderkammer (15) bewegbar ist, von denen eine eine Ruhestellung (s₁) ist, in die der Kolben (12) von der Feder (19) rückgestellt wird.

6. Anordnung nach einem der vorhergehenden Ansprüche,
**dadurch gekennzeichnet, dass** die Ventileinrichtung (17) ein Elektromagnetventil ist.

7. Anordnung nach einem der vorhergehenden Ansprüche,
**dadurch gekennzeichnet, dass** die Ventileinrichtung (17) so konfiguriert ist, dass sie einen Druckluftpuls mit einer Frequenz von bis zu 250 Hz liefert.

8. Anordnung nach einem der vorhergehenden Ansprüche,
**dadurch gekennzeichnet, dass** die Größe der Öffnung (20) in dem Zylinderkammergehäuse (11) oder die Konfiguration des Ventils derart ist, dass der Luftstrom aus dem Raum (V1) kleiner ist als der Druckluftstrom in den Raum (V1).

9. Getriebe mit einer Anordnung nach einem der Ansprüche 1 bis 8, derart, dass der längsverlaufende Schaft (13) des Druckluftzylinders (10) mit irgendeiner der Wellen des Getriebes gekoppelt ist, die beim Einlegen/Ausrücken verschiedener Gangpositionen in dem Getriebe benutzt werden.

10. Getriebe nach Anspruch 9,
**dadurch gekennzeichnet, dass** der längsverlaufende Schaft (13) mit einer Seitenhubwelle im Getriebe verbunden ist.

11. Verfahren zum Erzeugen einer Bewegung eines Kolbens (12) in einem Druckluftzylinder (10), der einen Teil einer Anordnung nach einem der Ansprüche 1 bis 8 bildet, **dadurch gekennzeichnet, dass** die Bewegung des Kolbens (12) erzeugt wird, indem die Steuereinheit (30) die Ventileinrichtung (17) aktiviert, so dass Druckluft dem Raum (V1) mit einem konstanten Strom oder mit Pulsen einer bestimmten Periode und Dauer zugeführt wird, so dass der Kolben (12) dadurch aus seiner Ruhestellung (s₁) in gewünschte Positionen in der Zylinderkammer (15) bewegt und auch in der jeweils gewünschten Position gehalten wird.

12. Verfahren nach Anspruch 11, ferner umfassend den Schritt des Erfassens der Position des Kolbens (12) in dem Druckluftzylinder (10), wobei die Steuereinheit (30) diese Information zur zuverlässigen Steuerung der Dauer und Periode der Druckluftpulse verwendet, bis der Kolben (12) sich in einer gewünschten Position befindet.

13. Verfahren nach Anspruch 11 oder 12, bei dem die Steuereinheit durch Zuführen eines konstanten Stroms von Druckluft zum Raum (V1) den Kolben (12) in eine äußere Extremstellung (s₃) in der Zylinderkammer (15) bewegt.

14. Verfahren nach einem der Ansprüche 11 bis 13, bei dem die Steuereinheit (30), falls die Druckluft in Pulsen zugeführt wird, durch Erhöhen der Dauer der Druckluftpulse eine vergrößerte Bewegung aus der Ruhestellung (s₁) des Kolbens bewirkt.

15. Verfahren nach einem der Ansprüche 11 bis 14, bei dem die Steuereinheit (30), falls die Druckluft in Pulsen zugeführt wird, durch Reduzieren der Dauer der Druckluftpulse eine verringerte Bewegung des Kolbens (12) aus der Ruhestellung (s₁) bewirkt.

16. Verfahren nach einem der Ansprüche 11 bis 15, bei dem eine Pulsdauererhöhung/-reduzierung ferner dazu verwendet wird, die Bewegungsgeschwindigkeit des Kolbens zu steuern.

## Revendications

1. Agencement pour déplacer un piston (12) dans un cylindre à air comprimé (10), lequel agencement comprend:
- un cylindre à air comprimé (10) comprenant : une enveloppe (11) qui entoure une chambre de cylindre cylindrique sensiblement circulaire (15), une tige longitudinale (13) destinée à transmettre une force provenant du cylindre à air comprimé, un piston (12) couplé à la tige longitudinale (13) et ayant une forme sensiblement circulaire et un rayon correspondant au rayon interne de la chambre de cylindre, le piston (12) étant placé dans la chambre de cylindre (15) d'une telle manière qu'un espace (V1, V2) est formé sur chaque côté du piston et qu'un des espaces (V1) a un tuyau (16) ou un tube connecté à celui-ci pour l'alimentation en air comprimé, et l'autre espace (V2) a disposé dans celui-ci un ressort (19) qui agit entre le piston (12) et l'enveloppe (11) de la chambre de cylindre de sorte que le ressort (19) agit pour pousser le piston vers une position extrême (S1) dans la chambre de cylindre (15), étant en position de repos, dans laquelle l'espace (V1) où l'air comprimé alimenté est réduit ;
- un dispositif de soupape (17) situé de manière adjacente à l'espace (V1) où l'air comprimé est alimenté, ou quelque part le long du tuyau d'air comprimé (16) ou du tube ;
- un dispositif à air comprimé pour l'alimentation en air comprimé à l'espace (V1) via le dispositif de soupape (17) et le tuyau d'air comprimé (16) ou le tube ;
- une unité de commande (30) connectée au dispositif de soupape (17) pour le contrôle de l'alimentation en air comprimé à l'espace (V1) dans le cylindre à air comprimé (10) via le tuyau d'air comprimé (16) ou le tube ; et
- une ouverture (20) ou une soupape qui permet à l'air de quitter l'espace (V1) lorsqu'une certaine pression prévaut dedans et par laquelle l'air est en mesure de quitter l'espace (V1), de sorte que l'ouverture (20) ou la soupape est toujours en communication avec l'espace (V1), lequel agencement est **caractérisé en ce que** l'unité de commande (30) comprend des moyens pour le contrôle du dispositif de soupape (17) d'une telle manière qu'il alimente en air comprimé l'espace (V1) en un flux constant, ou par impulsion de durées variables, de sorte que le piston (12) et la tige (13) couplés audit piston sont ainsi déplacés vers des positions souhaitées dans la chambre de cylindre (15) et maintenus également dans la position souhaitée respective.

2. Agencement selon la revendication 1, **caractérisé en ce que** l'agencement comprend des moyens pour la détection de la position du piston, représentant un paramètre, et **en ce que** ce paramètre est transmis à l'unité de commande (30) via une ligne (31) de façon à déterminer quand l'air comprimé doit alimenter l'espace (V1), et la durée des impulsion de l'air comprimé.

3. Agencement selon la revendication 2, **caractérisé en ce que** les moyens pour la détection de la position du piston (12) sont situés dans l'extension axiale de l'espace (V1) et comprend une deuxième tige (21) située dans l'extension de la première tige (13) sur le côté opposé du piston (12), et une unité de détermination de position (22) comprenant un renfoncement (23) dans lequel la deuxième tige (21) bouge de sorte que la position du piston (12) dans le cylindre à air comprimé (10) peut se détecter.

4. Agencement selon la revendication 1, 2 ou 3, **caractérisé en ce que** le piston (12) est mobile entre deux ou plusieurs positions continuellement variables dans la chambre de cylindre (15).

5. Agencement selon la revendication 1, 2 ou 3, **caractérisé en ce que** le piston (12) est mobile entre trois positions dans la chambre de cylindre (15), une de celles-ci est une position de repos (s₁) où le piston (12) est ramené par le ressort (19).

6. Agencement selon l'une quelconque des revendications précédentes, **caractérisé en ce que** le dispositif de soupape (17) est une soupape à solénoïde.

7. Agencement selon l'une quelconque des revendications précédentes, **caractérisé en ce que** le dispositif de soupape (17) est configuré de telle sorte qu'il produit une impulsion d'air comprimé avec une fréquence jusqu'à 250 Hz.

8. Agencement selon l'une quelconque des revendications précédentes, **caractérisé en ce que** la taille de l'ouverture (20) dans l'enveloppe de la chambre de cylindre (11), ou la configuration de la soupape, est telle que l'écoulement d'air provenant de l'espace (V1) est inférieur à l'écoulement d'air comprimé dans l'espace (V1).

9. Boîte de vitesses comprenant an agencement selon l'une quelconque des revendications 1-8, de sorte que la tige longitudinale (13) du cylindre à air comprimé (10) est raccordée à tout arbre de la boîte de vitesses qui est utilisé lorsque l'embrayage / le débrayage de plusieurs positions de vitesses dans la boîte de vitesses.

10. Boîte de vitesses selon la revendication 9, **caractérisée en ce que** la tige longitudinale (13) est raccordée à un arbre latéral de course dans la boîte de vitesses.

11. Procédé pour la génération d'un mouvement d'un piston (12) dans un cylindre à air comprimé (10) qui fait partie d'un agencement selon l'une quelconque des revendications 1 à 8, **caractérisé en ce que** le mouvement du piston (12) est généré par l'unité de commande (30) activant le dispositif de soupape (17) de sorte que l'air comprimé est alimenté à l'espace (V1) en un flux constant, ou par impulsion d'une certaine période et durée, de sorte que le piston (12) est ainsi déplacé de sa position de repos (s₁) aux positions souhaitées dans la chambre de cylindre (15) et est maintenu également dans la position souhaitée respective.

12. Procédé selon la revendication 11, comprenant également l'étape de détection de la position du piston (12) dans le cylindre à air comprimé (10), et l'unité de commande (30) utilisant cette information pour la commande fiable de la durée et de la période des impulsion de l'air comprimé jusqu'à ce que le piston (12) soit en position souhaitée.

13. Procédé selon la revendication 11 ou 12, dans lequel l'unité de commande, en alimentant d'un flux constant d'air comprimé l'espace (V1), bouge le piston (12) à une position extrême éloignée (s₃) dans la chambre de cylindre (15).

14. Procédé selon l'une quelconque des revendications 11 à 13, dans lequel l'unité de commande (30), si l'air comprimé est alimenté par impulsions, en augmentant la durée des impulsion d'air comprimé, a pour effet un mouvement accru depuis la position de repos du piston (s₁).

15. Procédé selon l'une quelconque des revendications 11 à 14, dans lequel l'unité de commande (30), si l'air comprimé est alimenté par impulsions, en réduisant la durée des impulsion de l'air comprimé, a pour effet un mouvement réduit du piston (12) depuis la position de repos (s₁) .

16. Procédé selon l'une quelconque des revendications 11 à 15, dans lequel une augmentation/ une réduction de la durée des impulsions est en outre utilisée pour la commande de la vitesse du mouvement du piston.
